Europäisches Patentamt

European Patent Office

Office européen des brevets

(11) Veröffentlichungsnummer: **0 504 440 A1**

## EUROPÄISCHE PATENTANMELDUNG

(21) Anmeldenummer: **91104144.0**

(22) Anmeldetag: **18.03.91**

(51) Int. Cl.5: **B27M 3/12**, B23Q 9/00, B25H 1/00

(43) Veröffentlichungstag der Anmeldung:
**23.09.92 Patentblatt 92/39**

(84) Benannte Vertragsstaaten:
**AT BE CH DE ES FR GB GR IT LI LU NL SE**

(71) Anmelder: **Schad, Anton**
**Am Wirthsfeld 17**
**W-7971 Aitrach/Ferthofen(DE)**

(72) Erfinder: **Schad, Anton**
**Am Wirthsfeld 17**
**W-7971 Aitrach/Ferthofen(DE)**

(54) **Führungsrahmen für Handoberfräsen, insbesondere bei Treppenbau.**

(57) Ein Führungsrahmen (1) für Handoberfräsen zum Herstellen von Ausfräsungen, insbesondere in ebenen oder gekrümmt verlaufende Treppenwangen oder Handläufe, mit Spannmittel zur Befestigung am Werkstück (11) und mit einem rechteckförmigen Führungsrahmen (1) soll so verbessert werden, daß seine Einsatzmöglichkeiten erweitert werden und zusätzlich eine bessere Sicht auf das Fräswerkzeug (8) möglich ist. Dies wird dadurch erreicht, daß an dem Führungsrahmen eine bewegliche Führungsschiene (2) gelagert ist, die mittels Schraubspindeln (4) gegenüber dem Führungsrahmen (1) einstell- und festlegbar ist. Durch einen zusätzlichen Trittabstandsmaßanschlag (14) ist der Führungsrahmen (1) schnell und leicht einfixierbar, wodurch bei geraden Wangen auf das Anreißen der Tritt verzichtet werden kann.

Fig.7

Die Erfindung bezieht sich auf einen Führungsrahmen für Handoberfräsen nach dem Oberbegriff des Anspruchs 1.

Ein solcher Führungsrahmen wird von der Fa. C.F. Scheer & Cie GmbH + Co.in Stuttgart-Feuerbach unter der Bezeichnung TW 4 hergestellt.Dieser Führungsrahmen kann nur in Verbindung mit einer speziellen Oberfräse der Fa. Scheer benutzt werden.Er eignet sich auch nur zur Verwendung bei geraden Werkstücken.Darüber hinaus wird durch den Kreuzschlitten die Sicht auf das Fräswerkzeug behindert.

Der Erfindung liegt daher die Aufgabe zugrunde,einen Führungsrahmen der eingangs genannten Art so zu verbessern,daß seine Einsatzmöglichkeiten erweitert werden und zusätzlich eine bessere Sicht auf das Fräswerkzeug möglich ist.

Diese Aufgabe wird durch die im kennzeichnenden Teil des Anspruchs 1 angegebenen Merkmale erreicht.Vorteilhafte Ausgestaltungen ergeben sich aus den Unteransprüchen.

Ein Ausführungsbeispiel der Erfindung ist in den Zeichnungen erläutert. Es zeigen:

Fig. 1  eine Draufsicht auf den Führungsrahmen bei Bearbeitung einer Treppenwange,

Fig. 2  eine Seitenansicht auf Fig. 1,

Fig. 3  eine Draufsicht auf den Führungsrahmen bei Bearbeitung eines Handlaufs,

Fig. 4  eine Seitenansicht auf Fig. 3,

Fig. 5  eine Seitenansicht des Führungsrahmens mit einer Zulage beim Tritt-Ausfräsen am Krümmling,

Fig. 6  einen Schnitt durch den Führungsrahmen mit Zulage und Krümmling beim Stellbrett-Ausfräsen,

Fig. 7  eine Draufsicht auf den Führungsrahmen mit einem Trittabstandsmaßanschlag,wobei das Grundgestell eine ausgesteifte,flache "U" Form aufweist und mit der beweglichen Führungsschiene den Führungsrahmen bildet,

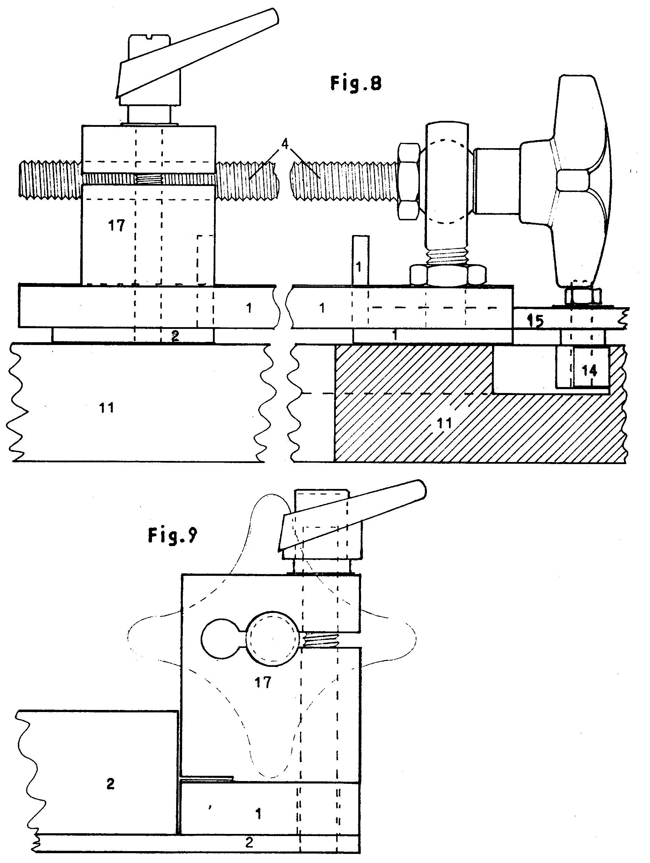

Fig. 8  eine Seitenansicht auf die Schmalseite von Fig.7 mit detailierter Darstellung des Spannmutterführungsblocks und

Fig. 9  eine Vorderansicht auf den Spannmutterführungsblock,

In den Figuren ist ein recheckförmiger Führungsrahmen (1) dargestellt,der auf ein Werkstück (11) aufgelegt und mittels zweier Schraubzwingen verspannt werden kann.Die Fig.-1- -2- u.-7- zeigen die Bearbeitung von ebenen Treppenwangen und die Fig.-3- und -4- die Bearbeitung von ebenen Handläufen.

An dem Führungsrahmen (1) ist an zwei seitlich angeordneten Schraubspindeln (4) eine bewegliche Führungsschiene (2) gelagert.Die beiden Schraubspindeln (4) durchdringen die Führungsschiene (2) an ihren Längsenden und sind dort in Innengewinde geführt.Die Schraub = spindeln (4) sind über Kontermuttern (9) an einer Lagerung am Führungsrahmen (1) verspannbar.Außerdem sind an den Schraubspindeln (4) Griffe angeordnet,mit denen die Schraubspindeln (4) drehbar sind. Die Führungsschiene 2 kann in beliebigem Abstand parallel und konisch zu den Holmen des Führungsrahmens (1)ein- und festgestellt werden.An dem Führungsrahmen (1) sind außerdem Seitenanschläge (3) vorgesehen.Der durch die Seitenanschläge (3),den einen Holm des Führungsrahmens (1) und die Führungsschiene (2) begrenzte Raum bestimmt die Länge und die Breite der zu fräsenden Nut,wenn eine Handoberfräse (7) mit ihrem Fräswerkzeug (8) innerhalb dieses Raumes geführt wird.

In den Holmen des Führungsrahmens 1 sind Langlöcher (6) angeordnet, in denen ein an der Unterseite des Führungsrahmens (1) anbringbarer Anschlag (10)verschiebbar gehalten ist.

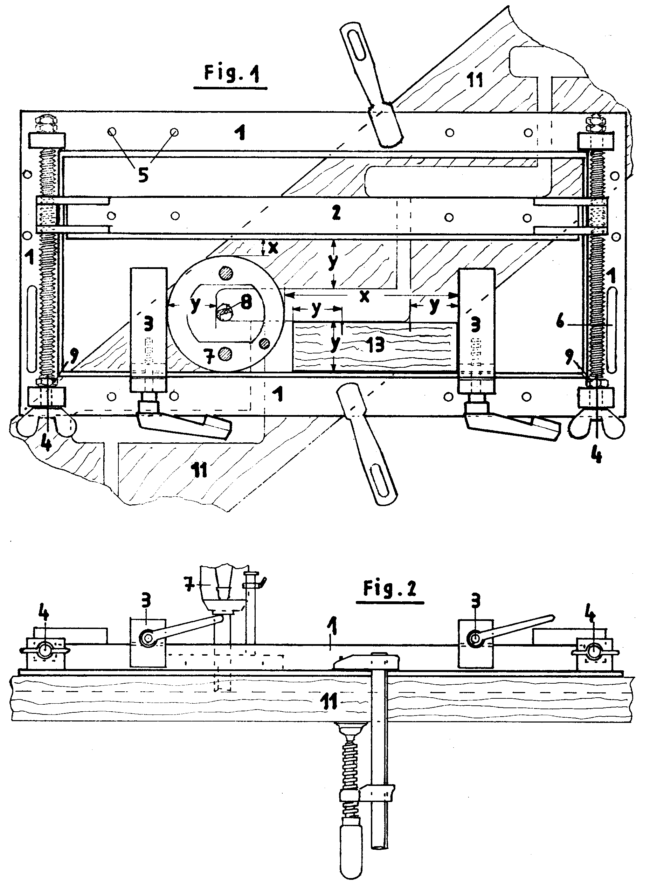

Die Anwendung des Führungsrahmens (1) bei ebenen Treppenwangen geschieht wie folgt: Zuerst legt man den Führungsrahmen (1) auf die gerissene Treppenwange auf.Mit Hilfe einer Abstandsmaßschablone (13) werden min der eine Holm des Führungsrahmens (1),die Führungsschiene (2) und die Seitenanschläge (3) nach dem Aufriss der Tritte ausgerichtet.Die Abstandsmaßschablone (13) hat eine Breite Y,die dem Abstand von der Grundplatte der Oberfräse (7) bis zum Außenrand des Fräswerkzeuges (8) entspricht.Nachdem der Führungsrahmen (1) ausgerichtet ist,werden die Schraubzwingen angezogen.Durch Hin- und Herschieben der Handoberfräse (7) wird mit Sicht auf die jeweilige Anrißkante die angestrebte Fräsnut erstellt,wobei die Grundplatte der Handoberfräse (7) mit ihrem Außenrand am Holm des Führungsrahmens (1),der Führungsschiene (2) und den Seitenanschlägen (3) entlanggleitet.Dabei entspricht die Bewegungsfläche der Grundplatte der Handoberfräse (7) den Maßen X (Fig. 1)

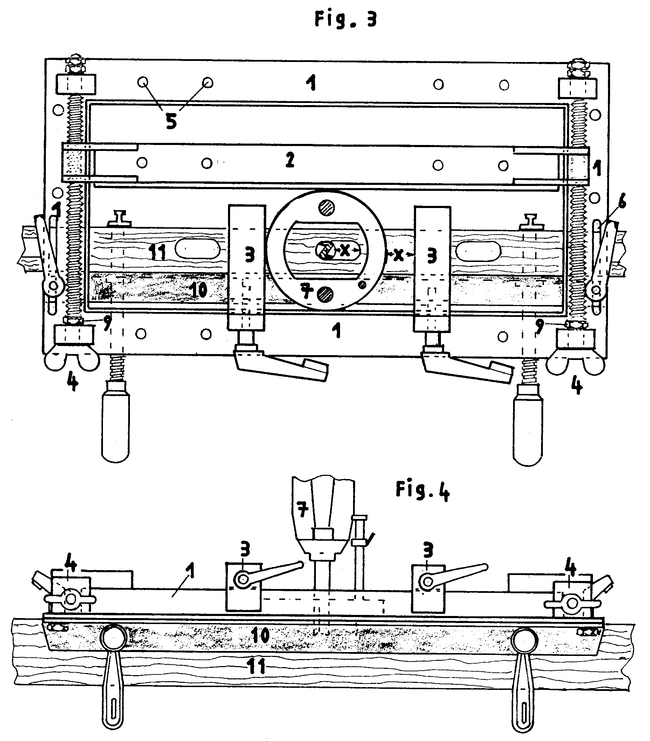

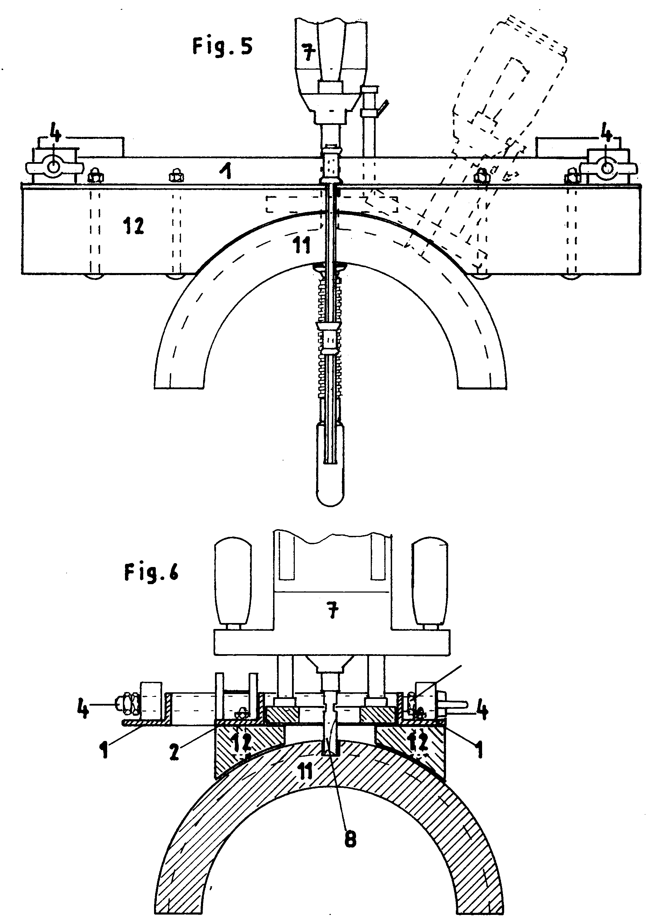

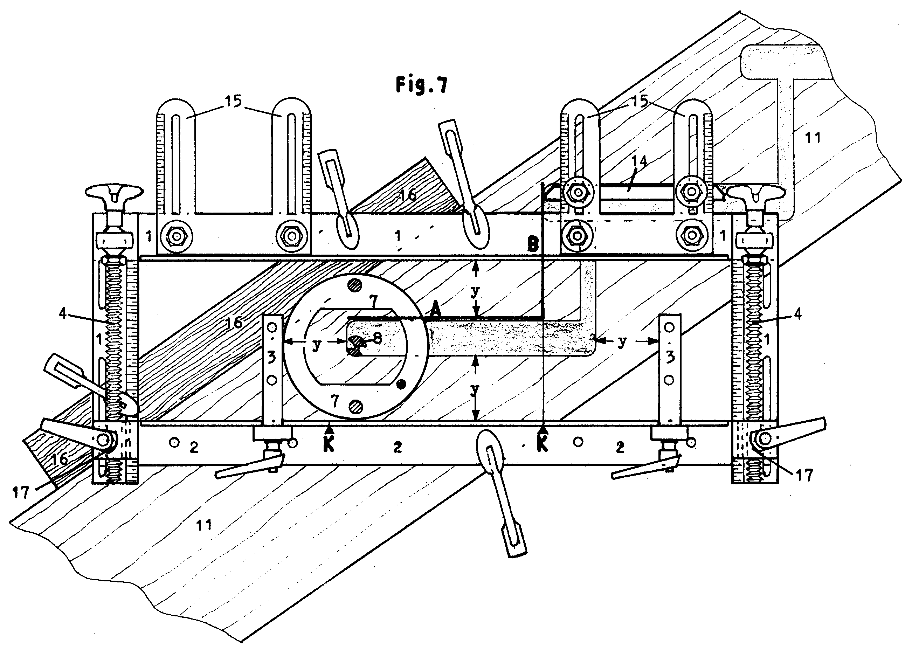

Neben der Bearbeitung von ebenen Werkstücken (11),wie sie in den Fig. 1 bis 4 und 7 dargestellt ist,können mit dem Führungsrahmen (1) auch gekrümmte Werkstücke (11) bearbeitet werden,wie die Fig.5 und 6 zeigen.Zu diesem Zweck weisen der Führungsrahmen (1) und die Führungsschiene (2) Löcher (5) auf,in denen Zulagen (12) befestigt werden können,die dann von der Unterseite des Führungsrahmens (1) vorstehen.Die Zulagen (12) weisen eine zur jeweiligen Form des Krümmlings deckungsgleiche Form auf,so daß der Führungsrahmen (1) ohne Schwierigkeiten auch bei gekrümmten Werkstücken verwendet und aufgelegt werden kann.In Fig. 5 ist je mindestens eine Zulage (12) unten am Holm des Führungsrahmens (1) und unten an der Führungsschiene (2) befestigt.Auf diese Weise ist das Ausfräsen von Trittstufen leicht möglich.In Fig. 6 ist das Ausfräsen der Stellbretter dargestellt.Auch hier passen die Zulagen (12) in Längsrichtung deckungsgleich zum Krümmling,sie ragen jedoch innen über den Holm des Führungsrahmens (1) und über die Führungsschiene (2) hinaus,so daß eine Auflage für die Grundplatte der Handoberfräse entsteht.

Zum schnelleren einfixieren des Führungsrahmens bei geraden Wangen ist am Holm (1) Fig. 7 zusätzlich ein Trittabstandsmaßanschlag (14) angeordnet.Dieser ist auf Grund des Steigungsmaßes (B) an der Anschlaghalterung (15) in einem vorher ermittelten Abstand von dem Führungsholm (1) arreiert.Das Maß des Abstands vom Führungsholm (1) bis zum Trittabstandsmaßanschlag (14) erhält man,indem vom Steigungsmaß (B) das Maß (Y) abgezogen wird.Die Festlegung des linken Anschlags (3) Fig. 7 wodurch das Auftrittmaß (A) bestimmt wird,erhält man durch die Markierung (K) an der beweglichen Führungsschiene (2) die der Stirnseite des Trittabstandsmaßanschlags und somit auch Vorderkant Tritt entspricht.Von dieser Markierung (K) (Fig.7 rechts) trägt man das Auftrittmaß (A) und das Maß (Y) nach links und stellt nach diesem Maß (A + Y) den linken Anschlag (3) fest.Die Länge der Fräsnut erhält man durch das Maß (Y) bzw. mit einer Abstandsmaßschablone (13) Fig. -1- bzw. -7-,nach der der rechte Anschlag (3) festgelegt wird.Auch die Breite der Fräsnut wird durch justieren der beweglichen Führungsschiene (2) mit Hilfe der Abstandsmaßschablone (13) bestimmt.Zur sicheren Beibehaltung des richtigen Neigungswinkels trägt das Anbringen eines zusätzlichen Wangenanschlags (16) bei.

Durch Spannmutterführungsblöcke (17),jeweils an den Längsenden der beweglichen Führungsschiene (2) angeordnet u.von den Schraubspindeln (4) durchsetzt,ist das Justieren und Festlegen der beweglichen Führungsschiene (2) einfach und schnell ausführbar.

Nach dem in der Beschreibung und den Zeichnungen dargestellten Erfindung,wurde ein universeller Führungsrahmen für die allgemein auf dem Markt befindlichen Handoberfräsen geschaffen.

Liste der bezifferten Figuren:

( 1) Führungsrahmen bzw.Grundgestell
( 2) Bewegliche Führungsschiene
( 3) Anschläge
( 4) Schraubspindeln
( 5) Zusatzlöcher
( 6) Langlöcher
( 7) Handoberfräs
( 8) Fräswerkzeug)
( 9) Kontermuttern
(10) Unterseitenanschlag
(11) Werkstück (Wangen,Krümmling usw.)
(12) Zulagen
(13) Abstandsmaßschablone
(14) Trittabstandsmaßanschlag
(15) Anschlagshalterung
(16) Wangenanschlag
(17) Spannmutterführungsblock

**Patentansprüche**

1. Führungsrahmen für Handoberfräsen zum Herstellen von Ausfräsungen,insbesondere in eben oder gekrümmt verlaufende Treppenwangen oder Handläufe,mit Spannmittel zur Befestigung am Werkstück und mit einem rechteckförmigen Führungsrahmen,dadurch gekennzeichnet,daß an dem Führungsrahmen (1) eine bewegliche Führungsschiene (2) gelagert ist,die mittels Schraubspindeln (4) gegenüber dem Führungsrahmen (1) einstell-und festlegbar ist.

2. Führungsrahmen nach Anspruch 1,dadurch gekennzeichnet,daß die Schraubspindel (4) auf gegenüberliegenden Holmen des Führungsrahmens /1) an ihren Längsenden drehbar gelagert sind und ein Innengewinde an den Längsenden der Führungsschiene (2) durchsetzten.

3. Führungsrahmen nach einem oder mehreren der vorhergehenden Ansprüche,dadurch gekennzeichnet,daß auf der Unterseite des Führungsrahmens (1) ein Anschlag (10) vorgesehen ist,der in Langlöchern (6) des Führungsrahmens (1) verschieb- und veststellbar ist.

4. Führungsrahmen nach einem oder mehreren der vorhergehenden Ansprüche ,dadurch gekennzeichnet,daß auf der Unterseite des Führungsrahmens (1) und der Führungsschiene (2) je eine Zulage (12) zum Bearbeiten gekrümmt verlaufender Werkstücke angeordnet ist.

5. Führungsrahmen nach einem oder mehreren der vorhergehenden Ansprüche,dadurch gekennzeichnet,daß an der festliegenden Führungsschiene (1) ein zusätzlicher ver-und feststellbarer Trittabstandsmaßanschlag (14) angeordnet ist,der bei genauer Einstellung bei geraden Wangen das Aufreißen der Tritt und Stellbretter erübrigt.

6. Führungsrahmen nach einem oder mehreren der vorhergehenden Ansprüche,dadurch gekennzeichnet,daß das Grundgestell aus einer steifen,flachen „U" Form besteht.

7. Führungsrahmen nach einem oder mehreren der vorhergehenden Ansprüche,dadurch gekennzeichnet,daß zum Bewegen und Feststellen der beweglichen Führungsschien (2),diese an ihren Längsenden jeweils an einem Spannmutterführungsblock befestigt ist.

8. Führungsrahmen nach einem oder mehreren der vorhergehenden Ansprüche,dadurch gekennzeichnet,daß die Spannmutterführungsblöcke (17) die Form eines Würfels aufweisen,der von der linken-und rechten Seite her mittig und ca. 1/3 von der Oberseite ein Innengewinde (Mutter) besitzt,daß auf Achshöhe in Achsrichtung dieser Mutter der Spannmutterführungsblock (17) aufgeschlitzt ist,daß der Schlitz ca.8/10 durch den Spannmutterführungsblock (17) reicht und in eine Bohrung mündet und dadurch die Eigenschaft einer Klemme aufweist,daß die beiden Spannmutterführungsblöcke (17),sowie jeweils der linke und rechte Holm des Grundgestells (1) von wiederum jeweils an den Längsenden der beweglichen Führungsschiene (2) befestigten Schraube durchsetzt sind und daß das Innengewinde der Spannmutterführungsblöcke (17) von den Schraubspindeln (4) durchsetzt ist.

Fig. 1

Fig. 2

Fig. 3

Fig. 4

Fig. 5

Fig. 6

# Fig.7

EP 0 504 440 A1

Fig.8

17

4

1

1

1

2

11

1

15

1

14

11

Fig.9

17

2

1

2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 392 307 (WIGHTMAN) <br> * Spalte 1, Zeilen 49-58; Spalte 2, Zeilen 26-34,46-49,Zeile 62 - Spalte 3, Zeile 22,33-35, Zeile 66 - Spalte 4, Zeile 4; Figuren 1,3,4 * | 1 | B 27 M 3/12 <br> B 23 Q 9/00 <br> B 25 H 1/00 |
| A | --- | 6 | |
| Y | US-A-2 752 961 (MELGAARD) <br> * Spalte 2, Zeilen 14-34,63-72; Anspruch 1; Figuren 3-5 * | 1 | |
| A | --- | 2 | |
| A | DE-C- 958 333 (SCHEIDER) <br> * Seite 2, Zeilen 35-49; Figuren 1,2 * <br> --- | 3 | |
| A | DE-C- 885 001 (WALLISER) <br> * Seite 2, Zeilen 50-85; Figuren 1,2 * <br> --- | 4 | |
| A | US-A-4 850 763 (MILTON) <br> * Spalte 6, Zeilen 22-34; Figuren 1,5 * <br> --- | 5 | |
| A | DE-A-3 508 496 (SCHEER & CIE) <br> ----- | | |

RECHERCHIERTE SACHGEBIETE (Int. Cl.5)

B 25 H
B 27 C
B 27 M
B 23 Q

~~Der vorliegende Recherchenbericht wurde für alle Patentansprüche erstellt~~

| Recherchenort | Abschlußdatum der Recherche | Prüfer |
|---|---|---|
| DEN HAAG | 09-10-1991 | PETERSSON B.U.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................................
& : Mitglied der gleichen Patentfamilie, übereinstimmendes Dokument

EPO FORM 1503 03.82 (P0403)

Europäisches
Patentamt

EP 91 10 4144

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebühren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden.

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung; sie enthält mehrere Erfindungen oder Gruppen von Erfindungen, nämlich:

siehe Blatt -B-

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind,

nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen,

nämlich Patentansprüche: 1-6

## MANGELNDE EINHEITLICHKEIT DER ERFINDUNG

Nach Auffassung der Recherchenabteilung entspricht die vorliegende europäische Patentanmeldung nicht den Anforderungen an die Eintheitlichtkeit der Erfindung; sie enthält mehrere Erfindungen oder Gruppen von Erfindungen,
nämlich:

1.    Ansprüche    1-6    :    Führungsrahmen für Handoberfräsen.

2.    Ansprüche    7,8    :    Spannmütterführungsblock.